# EUROPÄISCHE PATENTSCHRIFT

(11) **EP 3 785 315 B1**
(45) Veröffentlichungstag und Bekanntmachung des Hinweises auf die Patenterteilung: **26.03.2025**
(21) Anmeldenummer: 19721565.0
(22) Anmeldetag: 23.04.2019
(51) Int. Cl.: H01M 4/134, H01M 4/36, H01M 4/38, H01M 4/62, H01M 10/0525

(54) **PARTIKELFÖRMIGES SILICIUMHALTIGES AKTIVMATERIAL, NEGATIVE ELEKTRODE, LITHIUM-IONEN-BATTERIEZELLE, FAHRZEUG SOWIE VERFAHREN ZUR HERSTELLUNG VON AKTIVMATERIAL UND ELEKTRODE**
PARTICULATE SILICON-CONTAINING ACTIVE MATERIAL, NEGATIVE ELECTRODE, LITHIUM-ION BATTERY CELL, VEHICLE AND PROCESS FOR PRODUCING ACTIVE MATERIAL AND ELECTRODE
MATIÈRE ACTIVE PARTICULAIRE À BASE DE SILICIUM, ÉLECTRODE NÉGATIVE, CELLULE DE BATTERIE LITHIUM-ION, VÉHICULE ET PROCÉDÉ DE FABRICATION DE CETTE MATIÈRE ACTIVE ET DE CETTE ÉLECTRODE

(30) Priorität: 23.04.2018 DE 102018206182; 15.03.2019 DE 102019203546
(43) Veröffentlichungstag der Anmeldung: 03.03.2021
(73) Patentinhaber: VOLKSWAGEN AKTIENGESELLSCHAFT, 38440 Wolfsburg (DE)
(72) Erfinder: SCHRAMM, Linda-Susann, 38102 Braunschweig (DE)
(86) Internationale Anmeldenummer: PCT/EP2019/060266
(87) Internationale Veröffentlichungsnummer: WO 2019/206851

(56) Entgegenhaltungen:
- WO-A1-2015/021368
- DE-A1- 102014 118 089

## Beschreibung

Die Erfindung betrifft eine negative Elektrode mit einem partikelförmigen siliciumhaltigen Aktivmaterial, eine Lithium-Ionen-Batteriezelle, ein Fahrzeug sowie ein Verfahren zur Herstellung von Aktivmaterial und negativer Elektrode.

Lithium-Ionen-Batterien (LIB) gelten als die Schlüsseltechnologie in der Elektromobilität. Sie unterliegen daher hinsichtlich ihrer Kosten, ihrem Gewicht, sowohl der Energiedichte, ihrer Lebensdauer, als auch ihrer Sicherheit und der Ladungsdauer einer ständigen Optimierung.

Typische Lithium-Ionen-Batterien bzw. die entsprechenden Lithium-Ionen-Zellen weisen zwei unterschiedliche Elektroden, eine negative Elektrode auch Anode genannt und eine positive Elektrode auch Kathode genannt, auf. Die Elektroden setzen sich jeweils aus einem Stromableiter und zumindest einem darauf aufgebrachten Aktivmaterial sowie Inaktivmaterialien, wie Binder und Leitruß zusammen. Zwischen den Elektroden befinden sich ein ionenleitender Elektrolyt, der die Elektroden benetzt und als Vermittler der Vorgänge in der Zelle wirkt, und ein Separator, der die elektronische Trennung der Elektroden gewährleistet. Die Begriffe Anode und Kathode sind über den Oxidations- bzw. Reduktionsprozess definiert. An welcher der beiden Elektroden oxidiert- bzw. reduziert wird, hängt jedoch davon ab, ob die Batterie/Zelle geladen oder entladen wird. Es hat sich bei der Betrachtung von Batterien jedoch eingebürgert immer den Entladevorgang als Definition für die Begrifflichkeiten Anode und Kathode zu verwenden.

Die negative Elektrode der Zelle besteht üblicherweise aus einer Kupferfolie (inaktives Material zur Stromableitung) und einer Schicht aus Graphit oder Lithiumlegiertem Material als elektrochemisch aktive Materialien. In ihr werden während des Ladens die für die Leistungsbereitstellung benötigten positiv geladenen Lithium-Ionen eingelagert (Interkalation). Graphitanoden sind aktuell die gängigste Wahl, da sie ein niedriges Elektrodenpotential und eine geringe Volumenausdehnung bei der Einlagerung von Li⁺-Ionen aufweisen. Die positive Elektrode besteht aus Mischoxiden, die auf einem Aluminiumkollektor aufgebracht sind. Die positive Elektrode dient bei der Ladung der Zelle als Lithiumquelle.

Durch Variation der Elektrodenmaterialen ist es möglich, die Energiedichte von Lithium-Ionen-Batterien zu steigern und damit beispielsweise die Reichweite von Elektrofahrzeugen erheblich zu erhöhen. In dieser Hinsicht ist Silicium ein geeignetes Material. Es besitzt - im Vergleich zum kommerziell eingesetzten Graphit - eine 10fach höhere spezifische Kapazität und ein ähnlich niedriges Lithiierung-Potential (0,4 V vs. Li/Li⁺). Da zudem Silicium das zweithäufigste Material in der Erdkruste und die Herstellung mit geringen Kosten verbunden ist, das Material ungefährlich im Umgang und nicht toxisch ist, ist es aus industrieller Sicht attraktiv.

Einer kommerziellen Anwendung von siliciumhaltigen Anoden steht jedoch entgegen, dass eine sehr starke Volumenänderung der Anoden beim Lithiierungs- und Delithiierungsprozess (Li₁₅Si₄: 280%-300% vgl. LiC₆: 10-11%) gegeben ist. Das "Atmen" der Anoden hat die Pulverisierung der Aktivmaterialpartikel der Anode und damit weitere Probleme zur Folge:
a) negative Auswirkungen auf den Erhalt der Elektrodenarchitektur, was besonders bei hohen Flächenbeladungen zum Tragen kommt. Dies hat Kontaktverluste innerhalb der Elektrode, sowie zwischen Elektrode und Stromkollektor zur Folge und spiegelt sich in einer Verschlechterung der elektrischen Leitfähigkeit wieder;
b) eine ständig aufreißende und damit wachsende Solid Elektrolyte Interphace (SEI), was wiederum zu einem kontinuierlichem Li-lonen-Verbrauch, einem ansteigenden Innenwiderstand in der Zelle, damit zu einer geringen Coulombschen Effizienz (CE) und einer ungenügenden Zyklenstabilität führt.

Die Grenzschicht (Solid Elektrolyte Interface, SEI) zwischen negativer Elektrode und Elektrolyt wird während der ersten Zyklen der Zelle in Folge einer reduktiven Zersetzung verschiedener Elektrolytkomponenten, wie Lösungsmittel, Additiven und Verunreinigungen gebildet, welche bei den erreichten Spannungen thermodynamisch elektrochemisch nicht stabil sind. So kommt es während der Formierung stets zu einem irreversiblen Kapazitätsverlust.

Die Bildung der SEI ist jedoch existentiell für die Funktionalität und die Lebensdauer von LIB, da sie im Idealfall über eine gute ionische Leitfähigkeit verfügt, aber zugleich elektrisch isolierend wirkt. Damit unterdrückt sie weitestgehend durch ihre kinetisch limitierende Wirkung weitere Zersetzung des Elektrolyten und wirkt dadurch weiterem Kapazitätsverlust entgegen. Darüber hinaus hat die SEI eine "Siebfunktion" inne, sodass sie die Schichtstruktur von Graphit vor Exfoliation und damit die Zelle vor hohem Kapazitätsverlust schützt.

Im Fall von kommerziellen Graphit-Elektroden ist der irreversible Kapazitätsverlust in Folge der SEI-Formation mit ca. 2-5 % im Verhältnis zu dem siliciumhaltiger Elektroden mit 20-80 % sehr gering. Neben dem irreversiblen Kapazitätsverlust (ICL) während der anfänglichen Formierung kommt im Fall von siliciumhaltigen Elektroden ein zusätzlicher Kapazitätsverlust in Folge des starken "Atmens" während der Zyklisierung hinzu.

Daher wird zwischen zwei verschiedenen irreversiblen Kapazitätsverlusten (CL) unterschieden.

### a) "Initial CL" (ICL)

Der ICL unterliegt verschiedenen Einflussfaktoren. So ist dieser im Wesentlichen davon abhängig in welcher Form das Silicium verwendet wird. Es kann sich unter anderem in der Art des Materials (Si-Legierung, Komposit, SiOx, beschichtetes Si), in der Form, sowie in der Kristallinität (amorph, Kristallin oder polykristallin) und in der Partikelgröße (Nano-, Mikro-Bereich, Größenverteilung) und damit in der BET-Oberfläche unterscheiden. Dabei haben speziell Partikel im nano-Bereich eine höhere aktive Oberfläche und damit einen höheren ICL. Die SEI ist bei dieser Variante in Folge eines konstanten und besser über die aktive Oberfläche verteilten Stroms besonders dünn.

Zur ICL trägt die Aktivierung des Materials bei, was im Fall vom Silicium stärker als beim Graphit zum Tragen kommt.

Aufgrund des starken Unterschieds der Coulombschen Effizienz (CE) während der Formierung zwischen der positiven und negativen Elektrode kommt es zu deutlichen Herausforderungen beim Balancing der Elektroden. Ein optimiertes Kapazitätsverhältnis ist besonders wichtig, um den internen Lithiumverlust und damit den irreversiblen Kapazitätsverlust so gering wie möglich zu halten. So ist bereits ein Unterschied der CE von 99.8 % und 99.2 % in einer Vollzelle gravierend, da bereits nach 50 Zyklen die CEs jeweils bei 90.5 % und 66.9 % liegen.

### b) CCL (Kontinuierlicher Kapazitätsverlust)

Wie beschrieben, kommt es bei siliciumhaltigen Materialien zu einer starken Volumenausdehnung während des Lithiierens und einer Kontraktion während der Delithiierung und somit zum Brechen der SEI, welche zu unflexibel ist, um dem "Atmen" der Partikel nachzukommen. Durch das Aufbrechen der SEI kommt diese weder ihrer kinetisch limitierenden Wirkung noch ihrer Siebfunktion nach. In Folge dessen besteht dauerhaft ein thermodynamisch instabiles System und Elektrolyt sowie Lithium werden kontinuierlich verbraucht.

Das stetige Anwachsen der SEI aufgrund des stetigen Aufbrechens führt neben dem SEI-Widerstands- bzw. dem Zellinnenwiderstandsanstieg zur Zunahme des Anodenpotentials. Das höhere Anodenpotential hat zum einen eine geringere Lithiierungsmenge und damit eine Abnahme der Kapazität zur Folge. Zum anderen kommt es zum Anstieg des Kathodenpotentials damit die Vollzellabschaltspannung erreicht wird. Dies führt zu der Degradation der Kathodenstruktur und der oxidativen Zersetzung des Elektrolyten und damit zu einer geringen Lebensdauer der Zelle. Für eine Langzeitzyklisierung reicht die Optimierung des Kapazitätsverhältnisses von An- und Kathode (wie im Fall von ICL) nicht aus, da die Zelle "atmet", die SEI kontinuierlich wächst und damit Lithium verbraucht wird.

Um die Lebensdauer siliciumhaltiger Elektroden zu steigern, gibt es neben der Möglichkeit, die Volumenausdehnung des Siliciums durch die Optimierung des Aktivmaterials selbst zu reduzieren, auch die Ansätze die Binder-und Leitruß-Komponenten sowie das Elektrodenrezept zu optimieren und die Oberfläche des Aktivmaterials zu "veredeln".

Bei der "Veredelung" der Oberfläche des Aktivmaterials wird eine "artificial" SEI gebildet, die durch bekannte Beschichtungsverfahren wie CVD (chemical vapor depostion) und Besputtern von Oberflächen herstellbar ist.

Von diesen heben sich MLD (Molecular layer deposition) und ALD (Atomic layer deposition) durch die Möglichkeit ab, dünne, in sich geschlossene, homogene Filme hoher Qualität und komplexer 3D Struktur abscheiden zu können. Die Beschichtungen lassen sich auf atomarer bzw. molekularer Ebene kontrollieren. Die Reaktion zwischen Gas und Feststoff verläuft selbstlimitierend und "surface-saturated". Durch die Kombination beider Verfahren lassen sich Hybrid-Coatings darstellen, deren mechanische und elektronische Eigenschaften sich durch die Wahl und die Kombination der Precurser einstellen lassen.

In der DE 10 2017 110 902 A1 wird ein elektroaktives Material einer Lithium-Ionen-Batterie für Anwendungen im automotiven Bereich beschrieben, das Silicium oder Zinn aufweist. Das Material ist mit einer polymeren Beschichtung versehen, die sich reversibel um mindestens 250% von einem zusammengezogenen Zustand zu einem expandierten Zustand in mindestens einer Richtung verlängern kann. Die Beschichtung kann durch ALD aufgebracht werden und kann aus Siloxan, Polycaprolactam, Polyethylenoxid, einem Acrylatpolymer oder einem Methacrylatpolymer bestehen.

US 2004/0058232 A1 beschreibt Anoden einer Lithium-Ionen-Batterie, die eine polymere Schutzschicht aufweist, wobei die Schutzschicht schwefelorganische Verbindungen sowie ein elektronenleitendes und ein ionenleitendes Polymer beinhaltet. Zudem kann die Schutzschicht mit verschiedenen Metallsalzen, wie TiCl₄ dotiert sein.

In der US 2017/0263935 A1 werden Anoden einer Lithium-Ionen-Batterie offenbart, die aus einem oder mehreren Metallen der ersten und zweiten Hauptgruppe bestehen. Die Anoden weisen eine Schutzschicht auf, die Titanicone oder Alucone enthalten kann. Zudem kann die Schutzschicht aus mehreren Lagen bestehen, die mittels ALD oder MLD aufgebracht sind.

DE 10 2008 046 498 A1 offenbart eine negative Elektrode einer Lithium-Ionen-Batterie mit einer Aktivschicht, die eine poröse äußere Oberfläche ausbildet, wobei zumindest die äußere Oberfläche der Aktivschicht zumindest bereichsweise mit Nanopartikeln entweder aus Aluminiumoxid oder Zirkonoxid beschichtet ist.

Es wird in der DE 10 2014 118 089 A1 ein Elektrodenmaterial für eine negative Elektrode, die Silizium als Aktivmaterial umfasst, zur Verwendung in einer elektrochemischen Zelle beschrieben. Es ist eine Nanoverbundmaterial-Oberflächenbeschichtung für die negative Elektrode vorgesehen, die Kohlenstoff und ein Metalloxid von Titan, Aluminium, Zinn und Mischungen davon umfasst. Diese soll einen Ladungskapazitätsverlust in der elektrochemischen Zelle minimieren. Die Beschichtung kann mittels ALD vorgenommen werden.

WO 2015/021368 A1 beschreibt eine negative Elektrode einer Lithium-Ionen-Batterie, umfassend eine Siliciumplatte mit einer porösen Oberfläche, die auf einem Stromkollektor angeordnet ist. Die porösen Oberfläche der Siliciumplatte ist derart mit Aluminumoxid beschichtet, dass die Poren bis zu einer vorbestimmten Tiefe der Platte gefüllt sind. Die Beschichtung erfolgt mittels ALD unter Verwendung von Trimethylaluminium als Präkursor.

Es ist Aufgabe der Erfindung eine negative Elektrode mit einem siliciumhaltigen Aktivmaterial für eine Lithium-Ionen-Batteriezelle, die während des Lithiierungs-Zyklus expandiert, bereitzustellen, die die Nachteile des Standes der Technik zumindest teilweise behebt, insbesondere hinsichtlich eines Kapazitätsverlusts und der Ladekapazität.

Diese Aufgabe wird durch eine negative Elektrode einer Lithium-Ionen-Batteriezelle mit einem partikelförmigen siliciumhaltigen Aktivmaterial, eine Lithium-Ionen-Batteriezelle sowie ein Verfahren zur Herstellung der negativen Elektrode mit den Merkmalen der unabhängigen Ansprüche gelöst.

Die negative Elektrode für eine Lithium-Ionen-Batteriezelle umfasst einen Kollektor (nachfolgend auch als Ableiter bezeichnet) und eine darauf aufgebrachte Elektrodenschicht, welche ein partikelförmiges, siliciumhaltiges Aktivmaterial aufweist. Erfindungsgemäß ist eine Oberfläche des partikelförmigen, siliciumhaltigen Aktivmaterials oder der Elektrodenschicht mit einer Beschichtung versehen. Die Beschichtung ist mittels ALD und/oder MLD auf der Oberfläche unter Verwendung von zumindest einem Präkursor abgeschieden, der aus nachstehender Gruppe ausgewählt ist:
Ethandisäure, Propandisäure, Butandisäure, Pentandisäure, Heptandisäure, Octandisäure, Decandisäure, (E)-Butendisäure, (Z)-Butendisäure, Benzoesäure, 1,2-Benzoldicarbonsäure, 1,3-Benzoldicarbonsäure, 1,4-Benzoldicarbonsäure, 1,3,5-Benzoltricarbonsäure, 1,2,4,5-Benzoltetracarbonsäure, (2E,4E)-Hexa-2,4-diendicarbonsäure, Propan-1,2,3-tricarbonsäure, (1E)-Prop-1-en-1,2,3-tricarbonsäure, Ethan-1, 2-Diamin, Hexan-1, 6-Diamin, 4,4'-Oxydianilin, 4-Nitrobenzol-1,3-diamin, 1, 4-Diaminobenzol, Furo[3,4-f][2]benzofuran-1,3,5,7-tetron, Terephthalsäuredichlorid, und/oder Bis(hydroxyethyl)terephthalat.

In Ausgestaltungen der Erfindung kann zusätzlich einer oder mehrere der folgenden Präkursoren bei der ALD und/oder MLD verwendet werden: Trimethylaluminium (TMA), Diethylzink (DEZ), Titantetrachlorid (TiCl₄),

In einer Ausgestaltung ist das aktive Material der Elektrode bzw. sind deren einzelne Partikel vollständig von der Beschichtung umgeben.

Eine alternative negative Elektrode wird erfindungsgemäß bereitgestellt, bei der zuerst die Elektrodenschicht ausgebildet wird und anschließend die Elektrodenschicht mit der Beschichtung mittels ALD und/oder MLD auf der Oberfläche unter Verwendung von zumindest einem der vorgenannten Präkursor versehen. Bei dieser Variante sind nur die zugänglichen Flächen des Aktivmaterials bzw. der Partikel beschichtet.

Das erfindungsgemäße Aktivmaterial und die erfindungsgemäßen negativen Elektroden, das bzw. die unter Einsatz von ALD und/oder MLD mit den vorgenannten Präkursoren hergestellt ist/sind bietet(en) bei der Anwendung den Vorteil, dass die organischen Polymere bzw. die kovalent gebundene anorganisch/organische Polymerkette der Volumenausdehnung des Siliciums Raum geben ohne zu brechen. So kann vorteilhafterweise die Lebensdauer von Lithium-Ionen-Zellen gegenüber dem Stand der Technik deutlich gesteigert werden.

Vorzugsweise werden die vorgenannten Präkursoren wie folgt bei genannten Verfahren (ALD/MLD) kombiniert, um besonders bevorzugte Aktivmaterialen oder Elektroden zu erhalten:
MLD:
   Ethandisäure, Propandisäure, Butandisäure, Pentandisäure, Heptandisäure, Octandisäure, Decandisäure, (E)-Butendisäure, (Z)-Butendisäure, Benzoesäure, 1,2-Benzoldicarbonsäure, 1,3-Benzoldicarbonsäure, 1,4-Benzoldicarbonsäure, (2E,4E)-Hexa-2,4-diendicarbonsäure und/oder Propan-1,2,3-tricarbonsäure und/oder (1E)-Prop-1-en-1,2,3-tricarbonsäure
   mit Trimethylaluminium (TMA) und/oder Diethylzink (DEZ) und/oder Titantetrachlorid (TiCl₄),
      und/oder
ALD:
   Trimethylaluminium (TMA) und/oder Diethylzink (DEZ) und/oder Titantetrachlorid (TiCl₄) mit H₂O,
   vorzugsweise in Verhältnissen von (MLD:ALD-Zyklus) 1:1, 2:1/ 1:1, 3:2/ 2:1/ 1:1, 3:1, 4:1,.6:3;
      oder
MLD:
   Ethan-1,2-Diamin, Hexan-1,6-Diamin, 4,4'-Oxydianilin, 4-Nitrobenzol-1,3-diamin und/oder 1,4-Diaminobenzol
      mit
   Furo[3,4-f][2]benzofuran-1,3,5, 7-tetron,
      oder
MLD:
   Furo[3,4-f][2]benzofuran-1,3,5,7-tetron, (E)-Butendisäure, (Z)-Butendisäure, (2E,4E)-Hexa-2,4-diendicarbonsäure, Terephthalsäuredichlorid, 1, 2 Benzoldicarbonsäure Phthalsäure, 1, 3 Benzoldicarbonsäure, Isophthalsäure,
   1, 4 Benzoldicarbonsäure Terephthalsäure, (1E)-Prop-1-en-1,2,3-tricarbonsäure, 1,3,5-Benzoltricarbonsäure, 1,2,4,5-Benzoltetracarbonsäure und/oder Bis(hydroxyethyl)terephthalat
   mit Trimethylaluminium (TMA) und/oder Diethylzink (DEZ) und/oderTitantetrachlorid (TiCl₄);
      und/oder
ALD:
   Trimethylaluminium (TMA) und/oder Diethylzink (DEZ) und/oder Titantetrachlorid (TiCl₄) mit H₂O,
   vorzugsweise in Verhältnissen von (MLD:ALD-Zyklus) 1:1, 2:1/ 1:1, 3:2/ 2:1/ 1:1, 3:1, 4:1,.6:3.

Die Stärke der Schicht kann durch eine entsprechende Anzahl zu durchlaufender Zyklen von ALD und/oder MLD eingestellt werden. Vorzugsweise beträgt die Stärke der Schicht 2 nm bis 500 nm.

Die Verfahrensschritte von ALD und MLD sind dem Fachmann grundsätzlich bekannt.

Durch Auswahl der Präkursoren und die Anordnung der einzelnen abgeschiedenen Lagen zueinander können vorteilhafterweise die Eigenschaften der jeweiligen Schicht optimal auf die jeweilige Anwendung eingestellt werden.

So können durch eine geeignete Auswahl der Präkursoren Polymerketten oder verzweigte/vernetzte Polymerstrukturen erstellen.

So kann bevorzugterweise ein Härtegradient eingestellt werden, indem der organische Anteil der Präkursoren von der Oberfläche des Aktivmaterials aus mit zunehmender Entfernung abnimmt und ein höherer Anteil an anorganischen Präkursoren vorliegt.

Da Silicium-Verbindungen und solche, welche in der Solid Electrolyte Interface enthalten sind ein relativ hohes E-Modul haben und damit sehr steif sind (Li₂Si₂O₅ = 135 GPa, Li₄SiO₄ = 120 GPa, Li₂O = 141 GPa, SiO₂ = 70 GPa), ist es bevorzugt, zur Elektrode hin ein E-Modul bereitzustellen, das im Bereich von 50-150 GPa liegt und das zum Elektrolyten vorzugsweise geringerer als 50 GPa ist.

Aus der Kombination zwischen MLD- und ALD-Zyklen kann ein Gradient des E-Moduls innerhalb der Beschichtung eingestellt werden.

Vorzugsweise werden zur Stabilisierung der einzelnen Schichten organische Schichten und anorganische Schichten wechselnd aufgebracht.

Beispielsweise erfolgt ein MLD-Zyklus beispielsweise aus TiCl₄+EG (geringeres E-Modul), daraufhin ein ALD Zyklus (TiCl₄+H₂O) mit anschließend mind. einem MLD-Zyklus aus TiCl₄+GL (höheres E-Modul) durchgeführt werden.

Im Folgenden sind verschiedene mögliche Kombinationsmöglichkeit von ALD und MLD, vorzugsweise zur Einstellung eines E-Moduls dargestellt:

| | | | |
|---|---|---|---|
| Elektrodenoberfläche | | | Elektrolyt |
| 1:1 (MLD:ALD+MLD) | \| | | |
| 2:1 (MLD:ALD+MLD) | \|1:1 | | |
| 3:2 (MLD:ALD+MLD) | \|2:1 | (MLD:ALD+MLD) | \|1:1 (MLD:ALD+MLD) |
| 3:1 (MLD:ALD+MLD) | | | |
| 4:1 (MLD:ALD+MLD) | | | |
| 6:3 (MLD:ALD+MLD) | \|2:1 | | |

Die Vorteile der Beschichtung bzw. der künstlichen SEI sind wie folgt:
- Die Schicht kann im Vergleich zur natürlichen SEI sehr dünn gehalten werden, da diese durch ALD und MLD/ MLD-Verfahren definiert Molekül-Lagen abgeschieden werden.
- Die ionische Leitfähigkeit ist gegenüber der natürlichen SEI optimiert, da die Eigenschaften durch Wahl der Präkursoren genau eingestellt werden können.
- Die Flexibilität (E-Modul) und ein geringer Widerstand sind gegeben und korrelieren mit der Wahl und Kombination der Materialien und ist daher einstellbar.
- Es ist eine gute Adhäsion an der Elektrode gegeben, da durch die gewählten Verfahren zur Abscheidung kovalente Bindungen gebildet werden.

Ansonsten ist bei der Auswahl der Präkursoren und der Ausplanung wichtig, Materialien mit einem ausreichenden Dampfdruck sowie ausreichender Reaktivität gegenüber den anderen Komponenten im betriebenen Temperaturfenster und einer thermischen Stabilität zu wählen.

So ist bei den Elektrodenbeschichtungen die Temperatur durch die Zersetzungstemperatur eines Binders limitiert. Daher sollte diese bei Verwendung organischer Säuren, wie PAA (Polyarcylsäure) oder CMC (Carboxymelthylcellulose) 150°C nicht überschreiten.

Anders als bei der Elektrodenbeschichtung ist bei der Beschichtung des Aktivmaterials die Temperaturwahl unkritisch und hängt vom Dampfdruck, wie bereits beschrieben, und der Zersetzungstemperatur der Präkursoren selbst ab.

Um die Reaktionsrate zu steigern, sollten die Komponenten aus sterischen Gründen nicht zu "bulky" sein, zwei verschiedene funktionelle Gruppen und/oder einen organischen Ring besitzen sowie über ein steifes "backbone" verfügen.

Das siliciumhaltige Aktivmaterial ist vorzugsweise ausgewählt aus der folgenden Gruppe nano-Silicium, Silicium-Kohlenstoff-Komposite, Siliciumoxide, unbeschichtet oder mit Kohlenstoff beschichtet, binäre und ternäre Silicium-Legierungen, vorzugsweise Si-Sn, Si-Sn-Fe, Si-Sn-Al, Si-Fe-Co, Si-Ag, Si-Zn, Si-Al, Silicide, vorzugsweise FeSi₂, Mg₂Si; CaSi₂, prälithiertes Silicium, vorzugsweise jeweils mit einem Siliciumanteil von 1 wt% bis 95 wt%. Diese Partikel werden vorzugsweise unter Verwendung von Binder und Leitruß prozessiert.

In anderen Ausführungsformen kann das Aktivmaterial Silicium umfassen und in der Form von Nanodrähten, Nanostäben, Nanofasern oder Hohlröhren sein. Solche Siliciumstrukturen können dabei helfen, die großen Volumenänderungen, denen Silicium während einer Lithiumzyklisierung in einer Lithiumionenbatterie unterliegt, aufzufangen. In bestimmten Variationen kann die Siliciumstruktur außerdem ein Kohlenstoffmaterial, das darauf abgeschieden ist, umfassen. Vorgenannte Nanostrukturen fallen unter den Begriff Partikel. Vorzugsweise können diese Partikel ohne weitere Inaktivmaterialien, wie Binder und Leitruß direkt mittels CVD Verfahren auf den Ableiter abgeschieden werden.

Vorzugsweise liegt die mittlere Partikelpartikelgröße (X50) des Aktivmaterials im Bereich von 30 nm bis 20.0 µm. Kristallines Silicium ist vorzugsweise kleiner als 150 nm und amorphes Silicium kleiner als 870 nm.

Gegenstand der Erfindung sind, wie beschrieben negative Elektroden, die vorgenanntes Aktivmaterial und Inaktivmaterialien, wie den Kollektor aufweisen, wobei das Aktivmaterial auf dem Kollektor aufgebracht ist.

Als Kollektor wird üblicherweise ein Metall mit guter Leitfähigkeit eingesetzt. Entsprechende Materialien sind dem Fachmann grundsätzlich bekannt.

Wie bereits beschrieben, können die Partikel der Elektrode vor deren Herstellung beschichtet worden sein oder es erfolgt eine Beschichtung des Bereichs (Sichtbereich) der Elektrode, der mit dem Elektrolyten in Kontakt kommt. Dann ist im Idealfall die innere poröse Struktur der Elektrode bis zu dem Kollektor (Ableiter) hin beschichtet.

Eine erfindungsgemäße Elektrodenschicht weist 1-95 % Silicium; 0-95 % Graphit; 1-20 % Leitadditiv (Carbonanotubes, Vapor grown nanotubes, Multiwallnanotubes, SP); 1-20 % Binder (Carboxymethylcellulose, Styrol-Butadien-Kautschuk, Carboxymethylcellulose mit Styrol-Butadien-Kautschuk, Polyacrylisäure, Polyacrylisäure mit Styrol-Butadien-Kautschuk, Carboxymethylcellulose mit Polyacrylisäure, Carboxymethylcellulose mit Polyacrylsäure und Styrol-Butadien-Kautschuk, Alginate, Carboxymethylcellulose mit Polyacrylisäure und Polyalkylmethacrylat) auf.

Bevorzugt sind als Leitadditive Carbonanotubes, und als Binder werden bevorzugt polymere Carbonsäuren, wie CMC (Carboxymethylcellulose ), PAA (Polyacrylisäure) und Alginate sowie Carboxymethylcellulose mit Styrol-Butadien-Kautschuk oder Polyacrylicsäure als Binderkomponenten in der Elektrodenfertigung eingesetzt, da diese gemäß ihrem Anwendungsfeld eine gute Adhäsion zum Aktiv-und Inaktivmaterial sowie gute mechanische Eigenschaften aufweisen.

Die Schicht hat in Folge ihrer mechanischen Eigenschaften Potential, die Struktur der negativen Elektroden zu erhalten. Damit wird einem Kapazitätsverlust in Folge von SEI-Nachbildung entgegengewirkt. Die Elektrodenherstellung kann durch die Verwendung mittels solcher Präkursoren, die auch als Dispergiermittel bekannt sind und bei der Herstellung auch als diese wirken, verbessert und eventuell verkürzt werden. Außerdem verfügen sie zum Teil über einkonjungiertes Elektronensystem, was Potential für eine gute elektronische Leitfähigkeit bietet. Die Lithium-Ionen-Leitfähigkeit wird über die Carboxylgruppen und dergleichen ermöglicht. Demnach bietet eine solche Beschichtung Potential, die Schnellladefähigkeit von Batteriezellen zu erhöhen.

Gegenstand der Erfindung sind zudem eine Lithium-Ionen-Batteriezellen mit wenigstens einer der vorbeschriebenen negativen Elektroden, ein Fahrzeug, das über zumindest eine erfindungsgemäße Lithium-Ionen-Batteriezelle verfügt. Unter Fahrzeug sind insbesondere ein oder zweispurige Elektrofahrzeuge zu verstehen.

Beansprucht wird auch ein Verfahren zur Herstellung einer erfindungsgemäßen negativen Elektrode für eine Lithium-Ionen-Batteriezelle, mit folgenden Schritten:
a) Bereitstellen wenigstens einer negativen Elektrode oder eines Aktivmaterials,
b) Beschichten der wenigstens einen negativen Elektrode oder des Aktivmaterials mittels eines MLD- und/oder ALD-Beschichtungsverfahrens und/oder einer Kombination aus MLD- und ALD-Beschichtungsverfahren unter Verwendung der vorbeschriebenen Präkursoren, und
c) Erhalten wenigstens einer beschichteten negativen Elektrode und/oder von beschichteten Aktivmaterial.

Die zu den einzelnen Gegenständen der Erfindung gemachten Ausführungen betreffen sinngemäß alle Gegenstände der Erfindungen, auch wenn dies nicht explizit angegeben ist.

Die verschiedenen in dieser Anmeldung genannten Ausführungsformen der Erfindung sind, sofern im Einzelfall nicht anders ausgeführt, mit Vorteil miteinander kombinierbar.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: in einer schematischen Darstellung eine Lithium-Ionen-Zelle nach dem Stand der Technik,
- Figur 2: in einer schematischen Darstellung eine geschnittene Detailansicht der erfindungsgemäßen negativen Elektrode, und
- Figur 3: in einer schematischen Darstellung eine geschnittene Detailansicht der erfindungsgemäßen negativen Elektrode nach einer zweiten Ausführungsform.

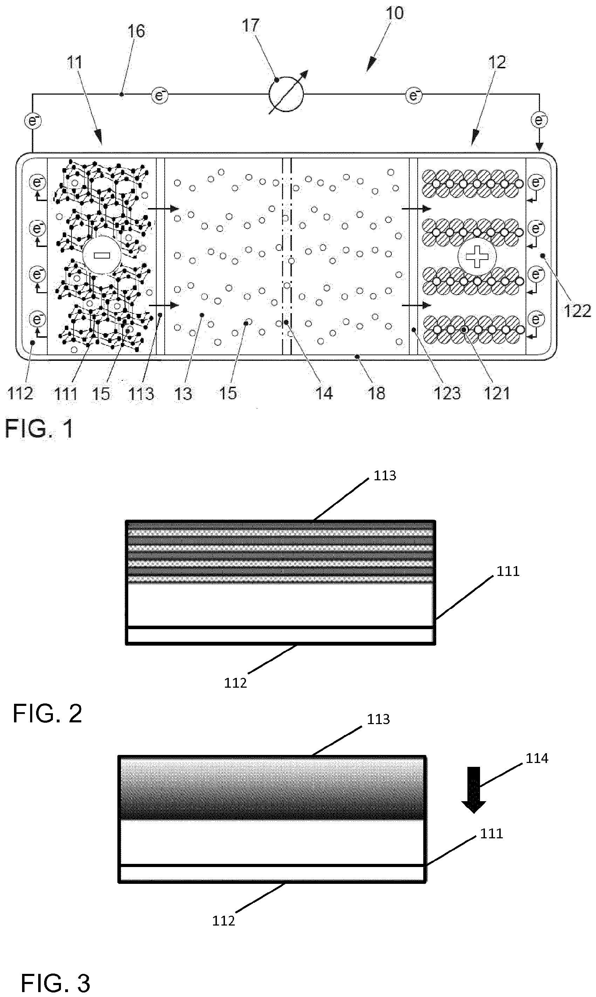

Figur 1 zeigt eine erfindungsgemäße Li-lonen-Zelle 10, die zwei unterschiedlichen Elektroden, eine negative Elektrode 11 auch Anode genannt und eine positive Elektrode 12 auch Kathode genannt, aufweist. Die Begriffe Anode und Kathode sind eigentlich über den Oxidations- bzw. Reduktionsprozess definiert. Ob an einer Elektrode 11, 12 gerade oxidiert oder reduziert wird, hängt jedoch davon ab ob die Li-lonen-Zelle 10 geladen oder entladen wird. Es ist daher üblich, den Entladevorgang als Basis für die Verwendung der Bezeichnungen Anode und Kathode zu verwenden. Entsprechend erfolgt auch die Benennung der Elektroden 11, 12 im Rahmen vorliegender Beschreibung. Die Elektroden 11, 12 bestehen aus einem Kollektor 112, 122 und einem darauf aufgebrachten Aktivmaterial 111, 121. Wobei für die negative Elektrode 11 das erfindungsgemäße silciumhaltige und partikelförmige Aktivmaterial zum Einsatz kommt. Zwischen den Elektroden 11, 12 ist zum einen ein ionenleitender Elektrolyt 13, der als Vermittler der Vorgänge in der Li-lonen-Zelle 10 dient, und ein Separator 14 angeordnet, der die elektronische Trennung der beiden Elektroden 11, 12 gewährleistet und für Ladungsträger durchgängig ist. Geeignete Elektrolyte 13 und Materialien für Separatoren 14 sind dem Fachmann bekannt. So werden als Separatoren 14 Polymer-Membranen oder keramische Materialien wie auch Vliesstoffe und Glasfaser-Separatoren verwendet.

Üblicherweise bildet sich im Elektrolyten die sogenannte Solid Electrolyte Interphase (SEI) auf der negativen Elektrode 11 aus, die einerseits vor dem Elektrolyt 14 schützt, jedoch für Lithium-Ionen 15 durchlässig ist. Bei vorliegender Erfindung ist eine derartige Schicht künstlich auf dem Aktivmaterial der Elektrode aufgebracht. Dieses ist in Figur 1 nicht dargestellt.

Die negative Elektrode 11 der Li-lonen-Zelle 10 besteht beispielsweise aus einer Kupferfolie als Kollektor 112 und einer Schicht des Aktivmaterials 111 mit verschiedenen anderen Komponenten, die üblicherweise zur Herstellung von Elektroden verwendet werden.

Im Aktivmaterial 111 werden beim Laden die für die Leistungsbereitstellung benötigten positiv geladenen Lithium-Ionen 15 eingelagert.

Die positive Elektrode 12 besteht üblicherweise aus Lithium-Mischoxiden, vorzugsweise Cobalt, Mangan oder Nickel, oder aus Phosphaten, die auf einer Aluminiumfolie als Kollektor 122 aufgebracht sind. Die positive Elektrode 12 bzw. deren Aktivmaterial 121 dient bei der Ladung der Li-lonen-Zelle 10 als Quelle für die Lithium-Ionen 15.

Beim Entladen, wie in Figur 1 dargestellt, wandern Lithium-Ionen 15 von der negativen Elektrode 11 durch den Elektrolyt 13 und den Separator 14 zur positiven Elektrode 12. Durch den damit verbundenen Oxidationsprozess werden Elektronen freigesetzt. Diese fließen von der negativen Elektrode 11 über eine elektrische Verbindung 16, in der ein elektrischer Verbraucher angeordnet ist, zur positiven Elektrode 12, wo ein Reduktionsprozess erfolgt und Elektronen aufgenommen werden. Die Lithium-ionen-Zelle 10 verfügt über ein Gehäuse 18.

In Figur 2 ist eine geschnittene Detailansicht einer negativen Elektrode 11 gezeigt. Auf einem Kollektor 112 ist eine Schicht aus einem siliciumhaltigen Aktivmaterial 111 aufgebracht. Diese ist wiederum mit eine Schicht / künstliche Solid Electrolyte Interphase 113 versehen, die aus einer Mehrzahl von wechselnd abgeschiedenen Lagen von Präkursoren aufgebaut sind. Durch die Auswahl der Präkursoren und deren Abscheidung in definierter Reihenfolge können die Materialeigenschaften Reihenfolge der Schicht / künstliche Solid Electrolyte Interphase 113 bestimmt werden.

Wie in Figur 3 dargestellt, kann auf diese Weise ein Härtegradient, symbolisiert durch Pfeil 114, in der Schicht 113 erzeugt werden, indem der organische Anteil der Präkursoren von der Oberfläche des Aktivmaterials 111 aus mit zunehmender Entfernung abnimmt und ein höherer Anteil an anorganischen Präkursoren vorliegt. Diese Schicht 113 liegt natürlich auch in einzelnen Lagen vor, es wurde jedoch zur Veranschaulichung des Gradienten eine abweichende Darstellung gewählt.

### Bezugszeichenliste

- 10: Li-lonen-Zelle
- 11: negative Elektrode / Anode
- 111: Aktivmaterial
- 112: Kollektor
- 113: Schicht / künstliche Solid Electrolyte Interphase
- 114: Pfeil

- 12: positive Elektrode / Kathode
- 121: Aktivmaterial
- 122: Kollektor
- 123: leitfähige Schicht

- 13: Elektrolyt
- 14: Separator
- 15: Lithium-Ionen
- 16: Leitung
- 17: Verbraucher
- 18: Gehäuse

## Patentansprüche

1. Negative Elektrode (11) für eine Lithium-Ionen-Batteriezelle (10), umfassend
einen Kollektor (112) und
eine darauf aufgebrachte Elektrodenschicht, welche ein partikelförmiges, siliciumhaltiges Aktivmaterial (111) aufweist,
wobei die Oberfläche des Aktivmaterials (111) oder der Elektrodenschicht mit einer Beschichtung (113) versehen ist, die mittels ALD und/oder MLD auf der Oberfläche abgeschieden ist unter Verwendung von zumindest einem Präkursor ausgewählt aus nachstehender Gruppe:
Ethandisäure, Propandisäure, Butandisäure, Pentandisäure, Heptandisäure, Octandisäure, Decandisäure, (E)-Butendisäure, (Z)-Butendisäure, Benzoesäure, 1,2-Benzoldicarbonsäure, 1,3-Benzoldicarbonsäure, 1,4-Benzoldicarbonsäure, 1,3,5-Benzoltricarbonsäure, 1,2,4,5-Benzoltetracarbonsäure, (2E,4E)-Hexa-2,4-diendicarbonsäure, Propan-1,2,3-tricarbonsäure, (1*E*)-Prop-1-en-1,2,3-tricarbonsäure, Ethan-1,2-Diamin, Hexan-1,6-Diamin, 4,4'-Oxydianilin, 4-Nitrobenzol-1,3-diamin, 1,4-Diaminobenzol, Furo[3,4-f][2]benzofuran-1,3,5,7-tetron, Terephthalsäuredichlorid, und/oder Bis(hydroxyethyl)terephthalat.

2. Negative Elektrode (11) nach Anspruch 1, wobei die mittels ALD und/oder MLD abgeschiedene Beschichtung (113) ferner unter Verwendung von zumindest einem zusätzlichen Präkursor ausgewählt aus nachstehender Gruppe gebildet ist:
Trimethylaluminium (TMA), Diethylzink (DEZ), Titantetrachlorid (TiCl₄).

3. Negative Elektrode (11) nach Anspruch 1 oder 2, wobei die einzelnen Partikel des siliciumhaltigen Aktivmaterials (111) vollständig von der Beschichtung (113) umgeben sind.

4. Negative Elektrode (11) nach Anspruch 1 oder 2, wobei nur die zugänglichen Flächen der Partikel des auf den Kollektor (112) aufgebrachten siliciumhaltigen Aktivmaterials (111) mit der Beschichtung (113) beschichtet sind.

5. Negative Elektrode (11) nach einem der vorhergehenden Ansprüche, wobei die Präkursoren wie folgt bei ALD und/oder MLD kombiniert sind:
MLD:
Ethandisäure, Propandisäure, Butandisäure, Pentandisäure, Heptandisäure, Octandisäure, Decandisäure, (E)-Butendisäure, (Z)-Butendisäure, Benzoesäure, 1,2-Benzoldicarbonsäure, 1,3-Benzoldicarbonsäure, 1,4-Benzoldicarbonsäure, (2E,4E)-Hexa-2,4-diendicarbonsäure, Propan-1,2,3-tricarbonsäure und/oder (1E)-Prop-1-en-1,2,3-tricarbonsäure
kombiniert mit Trimethylaluminium (TMA) und/oder Diethylzink (DEZ) und/oder Titantetrachlorid (TiCl₄),
und/oder
ALD:
Trimethylaluminium (TMA) oder Diethylzink (DEZ) oder Titantetrachlorid (TiCl₄) mit H₂O,
oder
MLD:
Ethan-1,2-Diamin, Hexan-1,6-Diamin, 4,4'-Oxydianilin, 4-Nitrobenzol-1,3-diamin und/oder 1,4-Diaminobenzol
kombiniert mit Furo[3,4-f][2]benzofuran-1,3,5,7-tetron,
oder
MLD:
Furo[3,4-f][2]benzofuran-1,3,5,7-tetron, (E)-Butendisäure, (Z)-Butendisäure, (2E,4E)-Hexa-2,4-diendicarbonsäure, Terephthalsäuredichlorid, 1,2-Benzoldicarbonsäure, Phthalsäure, 1,3-Benzoldicarbonsäure, Isophthalsäure, 1,4-Benzoldicarbonsäure, Terephthalsäure, (1E)-Prop-1-en-1,2,3-tricarbonsäure, 1,3,5-Benzoltricarbonsäure, 1,2,4,5-Benzoltetracarbonsäure und/oder Bis(hydroxyethyl)terephthalat
kombiniert mit Trimethylaluminium (TMA) und/oder Diethylzink (DEZ) und/oderTitantetrachlorid (TiCl₄);
und/oder
ALD:
Trimethylaluminium (TMA) oder Diethylzink (DEZ) oder Titantetrachlorid (TiCl₄) kombiniert mit H₂O.

6. Negative Elektrode (11) nach einem der vorhergehenden Ansprüche, wobei die Präkursoren und deren Reihenfolge bei der Abscheidung derart ausgewählt sind, dass ein Härtegradient gegeben ist.

7. Negative Elektrode (11) nach einem der vorhergehenden Ansprüche, wobei das Siliciummaterial ausgewählt ist aus der folgenden Gruppe:
nano-Silicium, Silicium-Kohlenstoff-Komposite, Siliciumoxide, unbeschichtet oder mit Kohlenstoff beschichtet, dotiert, Silicium-Legierungen, vorzugsweise mit Silber, Zink, Aluminium, Silicide, vorzugsweise FeSi₂, Mg₂Si; CaSi₂ , prälithiertes Silicium, vorzugsweise jeweils mit einem Siliciumanteil von 1 wt% bis 95 wt%.

8. Negative Elektrode (11) nach einem der vorhergehenden Ansprüche, wobei das Aktivmaterial (111) eine mittlere Partikelpartikelgröße (X50) im Bereich von 30 nm bis 20.0 µm aufweist.

9. Negative Elektrode (11) nach einem der vorhergehenden Ansprüche, wobei die Elektrodenschicht 1-95 % Silicium; 95-0 % Graphit; 1-20 % Leitadditiv und 1-20 % Binder aufweist.

10. Lithium-Ionen-Batteriezelle (10) mit wenigstens einer negativen Elektrode (11) nach einem der Ansprüche 1 bis 9.

11. Fahrzeug umfassend zumindest eine Lithium-Ionen-Batteriezelle (10) nach Anspruch 10.

12. Verfahren zur Herstellung einer negativen Elektrode (11) für eine Lithium-Ionen-Batteriezelle (10) nach einem der Ansprüche 1, 2 und 4 bis 9, aufweisend die Schritte:
a) Bereitstellen eines partikelförmigen, siliciumhaltigen Aktivmaterials (111),
b) Beschichten einer Oberfläche des Aktivmaterials (111) mittels eines MLD- und/oder ALD-Beschichtungsverfahrens und/oder einer Kombination aus MLD- und ALD-Beschichtungsverfahren unter Verwendung von zumindest einem Präkursor ausgewählt aus nachstehender Gruppe: Ethandisäure, Propandisäure, Butandisäure, Pentandisäure, Heptandisäure, Octandisäure, Decandisäure, (E)-Butendisäure, (Z)-Butendisäure, (2E,4E)-Hexa-2,4-diendicarbonsäure, Propan-1,2,3-tricarbonsäure, (1E)-Prop-1-en-1,2,3-tricarbonsäure, Benzoesäure, 1,2-Benzoldicarbonsäure, 1,3-Benzoldicarbonsäure, 1,4-Benzoldicarbonsäure, 1,3,5-Benzoltricarbonsäure, 1,2,4,5-Benzoltetracarbonsäure, Ethan-1,2-Diamin, Hexan-1,6-Diamin, 4,4'-Oxydianilin, 4-Nitrobenzol-1,3-diamin, 1,4-Diaminobenzol, Furo[3,4-f][2]benzofuran-1,3,5,7-tetron, Terephthalsäuredichlorid, und/oder Bis(hydroxyethyl)terephthalat, und
c) Aufbringen des beschichteten Aktivmaterials (111) auf einen Kollektor (112).

13. Verfahren zur Herstellung einer negativen Elektrode (11) für eine Lithium-Ionen-Batteriezelle (10) nach einem der Ansprüche 1, 3 bis 9, aufweisend die Schritte:
a) Bereitstellen einer Elektrodenschicht eines partikelförmigen, siliciumhaltigen Aktivmaterials (111) auf einen Kollektor (112), und
b) Beschichten einer Oberfläche der Elektrodenschicht mittels eines MLD- und/oder ALD-Beschichtungsverfahrens und/oder einer Kombination aus MLD- und ALD-Beschichtungsverfahren unter Verwendung von zumindest einem Präkursor ausgewählt aus nachstehender Gruppe: Ethandisäure, Propandisäure, Butandisäure, Pentandisäure, Heptandisäure, Octandisäure, Decandisäure, (E)-Butendisäure, (Z)-Butendisäure, (2E,4E)-Hexa-2,4-diendicarbonsäure, Propan-1,2,3-tricarbonsäure, (1E)-Prop-1-en-1,2,3-tricarbonsäure, Benzoesäure, 1,2-Benzoldicarbonsäure, 1,3-Benzoldicarbonsäure, 1,4-Benzoldicarbonsäure, 1,3,5-Benzoltricarbonsäure, 1,2,4,5-Benzoltetracarbonsäure, Ethan-1,2-Diamin, Hexan-1,6-Diamin, 4,4'-Oxydianilin, 4-Nitrobenzol-1,3-diamin, 1,4-Diaminobenzol, Furo[3,4-f][2]benzofuran-1,3,5,7-tetron, Terephthalsäuredichlorid, und/oder Bis(hydroxyethyl)terephthalat.

## Claims

1. Negative electrode (11) for a lithium-ion battery cell (10), comprising
a collector (112) and
an electrode layer applied thereto which comprises a particulate, silicon-containing active material (111),
wherein the surface of the active material (111) or of the electrode layer is provided with a coating (113) deposited on the surface by ALD and/or MLD using at least one precursor selected from the group of:
ethanedioic acid, propanedioic acid, butanedioic acid, pentanedioic acid, heptanedioic acid, octanedioic acid, decanedioic acid, (E)-butenedioic acid, (Z)-butenedioic acid, benzoic acid, 1,2-benzenedicarboxylic acid, 1,3-benzenedicarboxylic acid, 1,4-benzenedicarboxylic acid, 1,3,5-benzenetricarboxylic acid, 1,2,4,5-benzenetetracarboxylic acid, (2E,4E)-hexa-2,4-dienedicarboxylic acid, propane-1,2,3-tricarboxylic acid, (1*E)*-prop-1-ene-1,2,3-tricarboxylic acid, ethane-1,2-diamine, hexane-1,6-diamine, 4,4'-oxydianiline, 4-nitrobenzene-1,3-diamine, 1,4-diaminobenzene, furo[3,4-f][2]benzofuran-1,3,5,7-tetrone, terephthaloyl dichloride, and/or bis(hydroxyethyl) terephthalate.

2. Negative electrode (11) according to Claim 1, wherein the coating (113) deposited by ALD and/or MLD is further formed using at least one additional precursor selected from the group of:
trimethylaluminum (TMA), diethylzinc (DEZ), titanium tetrachloride (TiCl₄).

3. Negative electrode (11) according to Claim 1 or 2, wherein the individual particles of the silicon-containing active material (111) are completely surrounded by the coating (113).

4. Negative electrode (11) according to Claim 1 or 2, wherein only the accessible surfaces of the particles of the silicon-containing active material (111) applied to the collector (112) are coated with the coating (113).

5. Negative electrode (11) according to any of the preceding claims, wherein the precursors are combined as follows for ALD and/or MLD:
MLD:
ethanedioic acid, propanedioic acid, butanedioic acid, pentanedioic acid, heptanedioic acid, octanedioic acid, decanedioic acid, (E)-butenedioic acid, (Z)-butenedioic acid, benzoic acid, 1,2-benzenedicarboxylic acid, 1,3-benzenedicarboxylic acid, 1,4-benzenedicarboxylic acid, (2E,4E)-hexa-2,4-dienedicarboxylic acid, propane-1,2,3-tricarboxylic acid and/or (1E)-prop-1-ene-1,2,3-tricarboxylic acid
combined with trimethylaluminum (TMA) and/or diethylzinc (DEZ) and/or titanium tetrachloride (TiCl₄),
and/or
ALD:
trimethylaluminum (TMA) or diethylzinc (DEZ) or titanium tetrachloride (TiCl₄) with H₂O,
or
MLD:
ethane-1,2-diamine, hexane-1,6-diamine, 4,4'-oxydianiline, 4-nitrobenzene-1,3-diamine and/or 1,4-diaminobenzene
combined with furo[3,4-f][2]benzofuran-1,3,5,7-tetrone, or
MLD:
furo [3, 4-f] [2]benzofuran-1, 3, 5, 7-tetrone, (E) - butenedioic acid, (Z)-butenedioic acid, (2E,4E)-hexa-2,4-dienedicarboxylic acid, terephthaloyl dichloride, 1,2-benzenedicarboxylic acid, phthalic acid, 1,3-benzenedicarboxylic acid, isophthalic acid, 1,4-benzenedicarboxylic acid, terephthalic acid, (1E)-prop-1-ene-1,2,3-tricarboxylic acid, 1,3,5-benzenetricarboxylic acid, 1,2,4,5-benzenetetracarboxylic acid and/or bis(hydroxyethyl) terephthalate
combined with trimethylaluminum (TMA) and/or diethylzinc (DEZ) and/or titanium tetrachloride (TiCl₄);
and/or
ALD:
trimethylaluminum (TMA) or diethylzinc (DEZ) or titanium tetrachloride (TiCl₄) combined with H₂O.

6. Negative electrode (11) according to any of the preceding claims, wherein in the deposition the precursors and the sequence thereof are selected so as to result in a hardness gradient.

7. Negative electrode (11) according to any of the preceding claims, wherein the silicon material is selected from the group of:
nanosilicon, silicon-carbon composites, silicon oxides, uncoated or carbon-coated, doped, silicon alloys, preferably with silver, zinc, aluminum, silicides, preferably FeSi₂, Mg₂Si; CaSi₂, prelithiated silicon, preferably in each case having a silicon content of 1 wt% to 95 wt%.

8. Negative electrode (11) according to any of the preceding claims, wherein the active material (111) has an average particle size (X50) in the range from 30 nm to 20.0 µm.

9. Negative electrode (11) according to any of the preceding claims, wherein the electrode layer comprises 1-95% silicon; 95-0% graphite; 1-20% conductivity additive and 1-20% binder.

10. Lithium-ion battery cell (10) comprising at least one negative electrode (11) according to any of Claims 1 to 9.

11. Vehicle comprising at least one lithium-ion battery cell (10) according to Claim 10.

12. Process for producing a negative electrode (11) for a lithium-ion battery cell (10) according to any of Claims 1, 2 and 4 to 9, comprising the steps of:
a) providing a particulate, silicon-containing active material (111),
b) coating a surface of the active material (111) by an MLD and/or ALD coating process and/or a combination of MLD and ALD coating processes using at least one precursor selected from the group of: ethanedioic acid, propanedioic acid, butanedioic acid, pentanedioic acid, heptanedioic acid, octanedioic acid, decanedioic acid, (E) -butenedioic acid, (Z) -butenedioic acid, (2*E,*4*E*) *-* hexa-2,4-dienedicarboxylic acid, propane-1,2,3-tricarboxylic acid, (1E)-prop-1-ene-1,2,3-tricarboxylic acid, benzoic acid, 1,2-benzenedicarboxylic acid, 1,3-benzenedicarboxylic acid, 1,4-benzenedicarboxylic acid, 1,3,5-benzenetricarboxylic acid, 1,2,4,5-benzenetetracarboxylic acid, ethane-1,2-diamine, hexane-1,6-diamine, 4,4'-oxydianiline, 4-nitrobenzene-1,3-diamine, 1,4-diaminobenzene, furo[3,4-f][2]benzofuran-1,3,5,7-tetrone, terephthaloyl dichloride, and/or bis(hydroxyethyl) terephthalate, and
c) applying the coated active material (111) to a collector (112).

13. Process for producing a negative electrode (11) for a lithium-ion battery cell (10) according to any of Claims 1, 3 to 9, comprising the steps of:
a) providing an electrode layer of a particulate, silicon-containing active material (111) on a collector (112), and
b) coating a surface of the electrode layer by an MLD and/or ALD coating process and/or a combination of MLD and ALD coating processes using at least one precursor selected from the group of: ethanedioic acid, propanedioic acid, butanedioic acid, pentanedioic acid, heptanedioic acid, octanedioic acid, decanedioic acid, (E) -butenedioic acid, (Z) -butenedioic acid, (2*E,*4*E*) *-* hexa-2,4-dienedicarboxylic acid, propane-1,2,3-tricarboxylic acid, (1E)-prop-1-ene-1,2,3-tricarboxylic acid, benzoic acid, 1,2-benzenedicarboxylic acid, 1,3-benzenedicarboxylic acid, 1,4-benzenedicarboxylic acid, 1,3,5-benzenetricarboxylic acid, 1,2,4,5-benzenetetracarboxylic acid, ethane-1,2-diamine, hexane-1,6-diamine, 4,4'-oxydianiline, 4-nitrobenzene-1,3-diamine, 1,4-diaminobenzene, furo[3,4-f][2]benzofuran-1,3,5,7-tetrone, terephthaloyl dichloride, and/or bis(hydroxyethyl) terephthalate.

## Revendications

1. Électrode négative (11) pour une cellule de batterie lithium-ion (10), comprenant
un collecteur (112) et
une couche d'électrode appliquée sur celui-ci, qui présente une matière active particulaire (111) contenant du silicium,
la surface de la matière active (111) ou de la couche d'électrode étant dotée d'un revêtement (113) qui est déposé sur la surface au moyen d'un ALD et/ou d'un MLD en utilisant au moins un précurseur choisi dans le groupe suivant :
acide éthanedioïque, acide propanedioïque, acide butanedioïque, acide pentanedioïque, acide heptanedioïque, acide octanedioïque, acide décanedioïque, acide (E)-butènedioïque, acide (Z)-butènedioïque, acide benzoïque, acide 1,2-benzènedicarboxylique, acide 1,3-benzènedicarboxylique, acide 1,4-benzènedicarboxylique, acide 1,3,5-benzènetricarboxylique, acide 1,2,4,5-benzènetétracarboxylique, acide (2E,4E)-hexa-2,4-diènedicarboxylique, acide propane-1,2,3-tricarboxylique, acide (1*E*)-prop-1-ène-1,2,3-tricarboxylique, éthane-1,2-diamine, hexane-1,6-diamine, 4,4'-oxydianiline, 4-nitrobenzène-1,3-diamine, 1,4-diaminobenzène, furo[3,4-f] [2]benzofurane-1,3,5,7-tétrone, dichlorure d'acide téréphtalique et/ou téréphtalate de bis(hydroxyéthyle).

2. Électrode négative (11) selon la revendication 1, dans laquelle le revêtement (113) déposé au moyen d'un ALD et/ou d'un MLD est en outre formé en utilisant au moins un précurseur supplémentaire choisi dans le groupe suivant :
triméthylaluminium (TMA), diéthylzinc (DEZ), tétrachlorure de titane (TiCl₄).

3. Électrode négative (11) selon la revendication 1 ou 2, dans laquelle les particules distinctes de la matière active (111) contenant du silicium sont entièrement entourées par le revêtement (113).

4. Électrode négative (11) selon la revendication 1 ou 2, dans laquelle seulement les surfaces accessibles des particules de matière active (111) contenant du silicium appliquées sur le collecteur (112), sont revêtues du revêtement (113).

5. Électrode négative (11) selon l'une quelconque des revendications précédentes, dans laquelle les précurseurs sont combinés comme suit durant l'ALD et/ou le MLD :
MLD :
acide éthanedioïque, acide propanedioïque, acide butanedioïque, acide pentanedioïque, acide heptanedioïque, acide octanedioïque, acide décanedioïque, acide (E)-butènedioïque, acide (Z)-butènedioïque, acide benzoïque, acide 1,2-benzènedicarboxylique, acide 1,3-benzènedicarboxylique, acide 1,4-benzènedicarboxylique, acide (2E,4E)-hexa-2,4-diènedicarboxylique, acide propane-1,2,3-tricarboxylique et/ou acide (1E)-prop-1-ène-1,2,3-tricarboxylique
combinés avec du triméthylaluminium (TMA) et/ou à du diéthylzinc (DEZ) et/ou à du tétrachlorure de titane (TiCl₄) ,
et/ou
ALD :
triméthylaluminium (TMA) ou diéthylzinc (DEZ) ou tétrachlorure de titane (TiCl₄) combiné avec H₂O,
ou
MLD :
éthane-1,2-diamine, hexane-1,6-diamine, 4,4'-oxydianiline, 4-nitrobenzène-1,3-diamine et/ou 1,4-diaminobenzène
combinés avec de la furo[3,4-f] [2]benzofurane-1,3,5,7-tétrone,
ou
MLD :
furo[3,4-f] [2]benzofurane-1,3,5,7-tétrone, acide (E)-butènedioïque, acide (Z)-butènedioïque, acide (2E,4E)-hexa-2,4-diènedicarboxylique, dichlorure d'acide téréphtalique, acide 1,2-benzènedicarboxylique, acide phtalique, acide 1,3-benzènedicarboxylique, acide isophtalique, acide 1,4-benzènedicarboxylique, acide téréphtalique, acide (1E)-prop-1-ène-1,2,3-tricarboxylique, acide 1,3,5-benzènetricarboxylique, acide 1,2,4,5-benzènetétracarboxylique et/ou téréphtalate de bis(hydroxyéthyle)
combinés avec du triméthylaluminium (TMA) et/ou du diéthylzinc (DEZ) et/ou du tétrachlorure de titane (TiCl₄) ;
et/ou
ALD :
triméthylaluminium (TMA) ou diéthylzinc (DEZ) ou tétrachlorure de titane (TiCl₄) combiné avec H₂O.

6. Électrode négative (11) selon l'une quelconque des revendications précédentes, dans laquelle les précurseurs et leur ordre au cours du dépôt sont choisis de manière à obtenir un gradient de dureté.

7. Électrode négative (11) selon l'une quelconque des revendications précédentes, dans laquelle la matière contenant du silicium est choisie dans le groupe suivant nano-silicium, composites silicium-carbone, oxydes de silicium, non revêtus ou revêtus de carbone, dopés, alliages de silicium, de préférence avec de l'argent, du zinc, de l'aluminium, des siliciures, de préférence FeSi₂, Mg₂Si ; CaSi₂, silicium prélithié, de préférence chacun avec une teneur en silicium de 1 % en poids à 95 % en poids.

8. Électrode négative (11) selon l'une quelconque des revendications précédentes, dans laquelle la matière active (111) présente une taille moyenne de particule (X50) dans la plage de 30 nm à 20,0 µm.

9. Électrode négative (11) selon l'une quelconque des revendications précédentes, dans laquelle la couche d'électrode présente 1 à 95 % de silicium ; 95 à 0 % de graphite ; 1 à 20 % d'additif conducteur et 1 à 20 % de liant.

10. Cellule de batterie lithium-ion (10) comprenant au moins une électrode négative (11) selon l'une des revendications 1 à 9.

11. Véhicule comprenant au moins une cellule de batterie lithium-ion (10) selon la revendication 10.

12. Procédé de fabrication d'une électrode négative (11) pour une cellule de batterie lithium-ion (10) selon l'une des revendications 1, 2 et 4 à 9, présentant les étapes consistant à :
a) fournir une matière active particulaire (111) contenant du silicium,
b) revêtir une surface de la matière active (111) au moyen d'un procédé de revêtement MLD et/ou ALD et/ou d'une combinaison de procédés de revêtement MLD et ALD en utilisant au moins un précurseur choisi dans le groupe suivant : acide éthanedioïque, acide propanedioïque, acide butanedioïque, acide pentanedioïque, acide heptanedioïque, acide octanedioïque, acide décanedioïque, acide (E)-butènedioïque, acide (Z)-butènedioïque, acide (2E,4E)-hexa-2,4-diènedicarboxylique, acide propane-1,2,3-tricarboxylique, acide (1E)-prop-1-ène-1,2,3-tricarboxylique, acide benzoïque, acide 1,2-benzènedicarboxylique, acide 1,3-benzènedicarboxylique, acide 1,4-benzènedicarboxylique, acide 1,3,5-benzènetricarboxylique, acide 1,2,4,5-benzènetétracarboxylique, éthane-1,2-diamine, hexane-1,6-diamine, 4,4'-oxydianiline, 4-nitrobenzène-1,3-diamine, 1,4-diaminobenzène, furo[3,4-f] [2]benzofurane-1,3,5,7-tétrone, dichlorure d'acide téréphtalique et/ou téréphtalate de bis(hydroxyéthyle), et
c) appliquer la matière active (111) revêtue sur un collecteur (112).

13. Procédé de fabrication d'une électrode négative (11) pour une cellule de batterie lithium-ion (10) selon l'une des revendications 1, 3 à 9, présentant les étapes consistant à :
a) fournir une couche d'électrode d'une matière active particulaire (111) contenant du silicium sur un collecteur (112), et
b) revêtir une surface de la couche d'électrode au moyen d'un procédé de revêtement MLD et/ou ALD et/ou d'une combinaison de procédés de revêtement MLD et ALD en utilisant au moins un précurseur choisi dans le groupe suivant : acide éthanedioïque, acide propanedioïque, acide butanedioïque, acide pentanedioïque, acide heptanedioïque, acide octanedioïque, acide décanedioïque, acide (E)-butènedioïque, acide (Z)-butènedioïque, acide (2E,4E)-hexa-2,4-diènedicarboxylique, acide propane-1,2,3-tricarboxylique, acide (1E)-prop-1-ène-1,2,3-tricarboxylique, acide benzoïque, acide 1,2-benzènedicarboxylique, acide 1,3-benzènedicarboxylique, acide 1,4-benzènedicarboxylique, acide 1,3,5-benzènetricarboxylique, acide 1,2,4,5-benzènetétracarboxylique éthane-1,2-diamine, hexane-1,6-diamine, 4,4'-oxydianiline, 4-nitrobenzène-1,3-diamine, 1,4-diaminobenzène, furo[3,4-f][2]benzofurane-1,3,5,7-tétrone, dichlorure d'acide téréphtalique et/ou téréphtalate de bis(hydroxyéthyle).
